# EUROPÄISCHE PATENTANMELDUNG

(11) **EP 0 988 923 A1**
(43) Veröffentlichungstag der Anmeldung: **29.03.2000**
(21) Anmeldenummer: 99890272.0
(22) Anmeldetag: 25.08.1999
(51) Int. Cl.: B23Q 1/76

(54) **Lünette**

(30) Priorität: 26.08.1998 AT 144798
(71) Anmelder: Deinhammer, Karl, 4650 Lambach (AT)
(72) Erfinder: Deinhammer, Karl, 4650 Lambach (AT)
(74) Vertreter: Patentanwälte BARGER, PISO & PARTNER

(57) **Zusammenfassung**

Lünette zur Abstützung des freien Endes langer und im wesentlichen zylindrischer Werkstücke auf einer Bearbeitungsmaschine, wobei die Lünette zumindest zwei Tragrollen (3) aufweist, diese Tragrollen (3) drehbar in Schenkeln (4) gelagert sind, die Schenkeln (4) an den den Tragrollen (3) abgewandten Enden schwenkbar gelagert sind, und zwischen den Schenkeln (4) eine den Spreizwinkel zwischen den Schenkeln fixierbar verändernde Vorrichtung vorgesehen ist.

Die erfindung ist dadurch gekennzeichnet, daß die Fixiervorrichtung eine Spindelvorrichtung (5) ist, die bevorzugt an den beiden Schenkeln (4) angreift.

Die Unteransprüche betreffen eine besonders robuste und einfache Zentriervorrichtung.

## Beschreibung

Die Erfindung betrifft eine Lünette zur Abstützung des freien Endes langer und im wesentlichen zylindrischer Werkstücke auf einer Bearbeitungsmaschine mit zumindest zwei Tragrollen, die drehbar in Schenkeln gelagert sind, wobei die Schenkeln an den den Tragrollen abgewandten Enden schwenkbar gelagert sind und wobei zwischen den Schenkeln eine den Spreizwinkel zwischen den Schenkeln fixierbar verändernde Fixiervorrichtung vorgesehen ist.

Eine derartige Vorrichtung ist aus der US 4,463,635 A bekannt. Es ist aber die dortige Vorrichtung ausschließlich mit drei Stützrollen denkbar, da es Ziel der Druckschrift ist, den zu stützenden Gegenstand sicher axial zu halten, was zumindest drei Stützrollen erfordert. Um diese Stützrollen zuverläßig in gleichem radialen Abstand von der DRehachse zu halten, wird eine rein radial (linear) verschoben, und übe einen symmetrischen Mechanismus werden die beiden anderen, jeweils an einem Schwenkhebel angeordneten Stützrollen entsprechend bewegt. Es ist dieser Mechanismus gemeinsam mit der zentralen Stützrolle auch der Feststellmechanismus.

Nachteilig ist der komplizierte Aufbau der Vorrichtung, der schwer zu justieren und zu warten ist, und die damit verbundenen hohen Investitions- und Instandhaltungskosten.

Auf derartigen Maschinen, beispielsweise Drehbänken, aber auch anderen Bearbeitungsmaschinen wird das Werkstück im allgemeinen beidseitig eingespannt oder einseitig eingespannt und einseitig auf einem Dorn od.dgl. zentriert gehalten. Nur bei kurzen Werkstücken ist es möglich, mit einer einseitigen Einspannung auszukommen und das andere Ende des Werkstückes frei in den Arbeitsbereich ragen zu lassen.

Bei der Holzbearbeitung, aber nicht nur dort, ist man mit dem Problem konfrontiert, Werkstücke bearbeiten zu müssen, die unter Umständen erheblich von der Zylinderform abweichen und dabei unter Umständen auch eine gekrümmte Achse aufweisen, so daß nurmehr ansatzweise von Zylinderform gesprochen werden kann. Es ist auch in diesen Fällen notwendig, das freie Ende, darunter wird im folgenden das Ende verstanden, auf das kein Drehmoment übertragen wird, zu stützen und zu lagern. Dies ist beispielsweise mit der eingangs genannten Vorrichtung völlig ausgeschlossen.

Andere, der oben genannten ähnliche, Vorrichtungen sind aus der US-A-4,177,701 und der US-A-4,517,866 bekannt. Erstere hat die Stützrollen nicht an Schwenkhebeln gelagert, letztere bewegt und fixiert die Schwenkhebel der Stützrollen einzeln.

Die Erfindung hat das Ziel, eine einfache, robuste und insbesonders zur Bearbeitung relativ gebogeneer Werkstücke, beispielsweise bei der Holzverarbeitung geeignete Lünette anzugeben.

Die Erfindung sieht dazu vor, daß bei einer Lünette der eingangs genannten Art die Fixiervorrichtung eine Spindelvorrichtung ist, die bevorzugt an den beiden Schenkeln angreift.

Ein bevorzugtes Anwendungsgebiet sind Zapfenfräsmaschinen für Rund- oder Profilholz in Stangenform, in welchem Fall das Werkstück vorzugsweise langsam dreht.

Als eine Besonderheit ist zur Stabilisierung vorgesehen, daß die den Stützrollen abgewandten Schenkelenden konzentrisch zu ihren Schwenkachsen verlaufende Zahnradsegmente tragen bzw. Zahnradsegmente aufweisen, durch die die symmetrische Lage der beiden Schenkel sichergestellt wird.

Die Erfindung wird anhand der Zeichnungen näher erläutert. Dabei zeigt
die Fig. 1 eine erfindungsgemäße Vorrichtung in einer Ansicht entlang der Achse des zu bearbeitenden Werkstückes und
die Fig. 2 eine Ansicht in Richtung des Pfeiles II in Fig. 1.

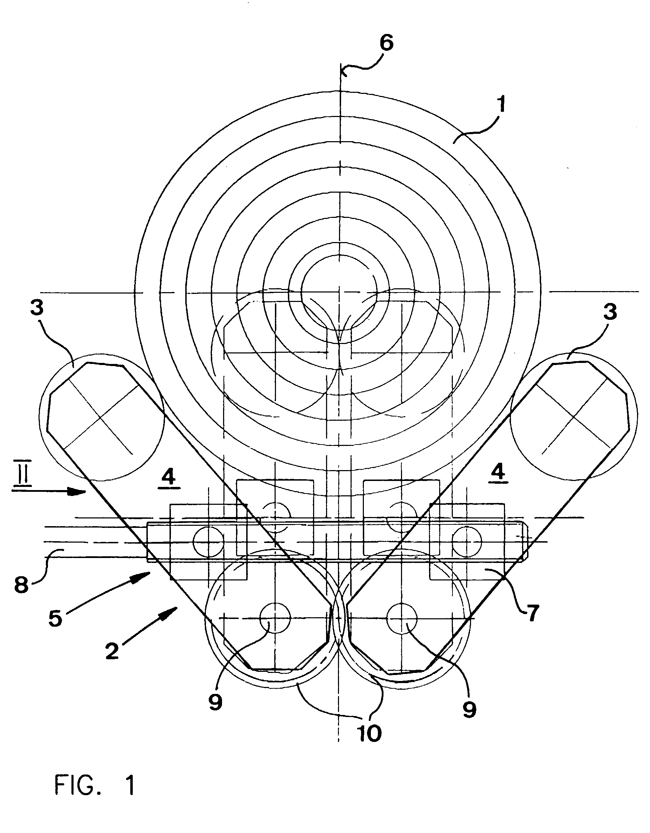

Ein längliches Werkstück 1 ist in Fig. 1 im Bereich der erfindungsgemäßen Lünette 2 dargestellt. Es ruht auf Stützrollen 3, die frei drehbar in Schenkeln 4 der Lünette 2 gelagert sind. Bevorzugt sind pro Rolle 3 zwei Schenkel 4 vorgesehen, um kragende Achslasten zu vermeiden.

Die Schenkel 4 sind mittels einer Spindelvorrichtung 5 in ihren Winkel bezüglich der vertikalen Bearbeitungsmittelebene 6 verstellbar. Im dargestellten Ausführungsbeispiel besteht die Spindelvorrichtung 5 aus zwei schwenkbar in den Schenkeln 4 eingesetzten Kunststoffmuttern 7, die jeweils ein Links- bzw. eine Rechtsgewinde aufweisen, und einer in die beiden Muttern symmetrisch eingesetzten Spindel 8, die ebenfalls über einen linksgängigen und einen rechtsgängigen Abschnitt verfügt. Es ist selbstverständlich denkbar, statt dieser Vorrichtung eine andere Verstellvorrichtung vorzusehen, beispielsweise eine nur rechtsgängige Spindel, die nur in einer Mutter gelagert ist und am anderen Schenkel durch eine passende Halterung fixiert ist.

Durch das verschiedene Justieren der Schenkel 4 bezüglich der Symmetrieebene 6 kann die Lünette auf verschiedene Durchmesser des Werkstückes 1 eingestellt und an diese Durchmesser angepaßt werden.

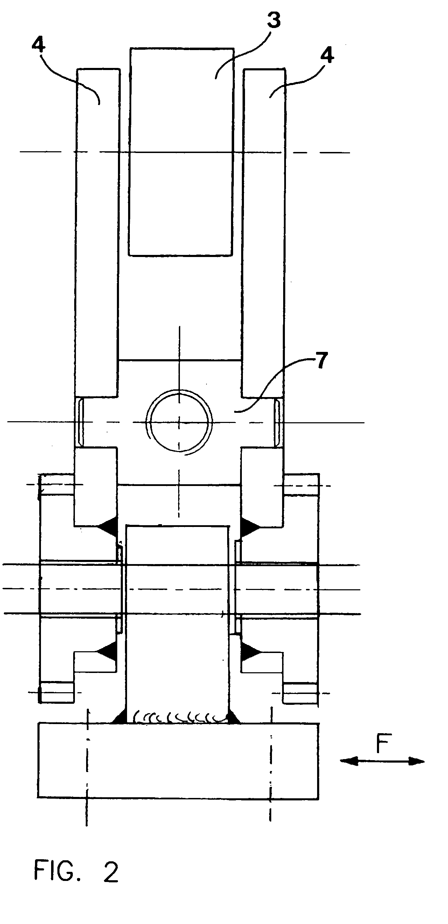

Eine Anpassung an die unterschiedliche Länge der Werkstücke 1, wie dies insbesondere bei der Bearbeitung von Naturprodukten notwendig ist, erfolgt durch eine nicht detailliert, sondern nur schematisch angedeutete Längsverschieblichkeit (Fig. 2) mittels einer Befestigungskonsole, die in Richtung des Doppelpfeiles F am Schlitten verfahrbar ist.

Um die Position der Schenkel 4 zueinander und gegenüber der Symmetriebene 6 zu sichern, ist beim gezeigten Ausführungsbeispiel konzentrisch zu den Schwenkachsen 9 der beiden Schenkel 4 jeweils ein Zahnrad 10 drehfest mit den Schenkeln 4 vorgesehen, wobei die beiden Zahnräder 10 miteinander kämmen und so gemeinsam mit der Spindelvorrichtung 5 eine statisch bestimmte Konfiguration schaffen.

Es ist nicht notwendig, daß durchgehende Zahnräder 10 verwendet werden, wie aus der strichpunktierten Lage, die für kleinste Durchmesser und noch darunter eingezeichnet ist, hervorgeht. Es reicht ein Bogenbereich von 45° für das Funktionieren der Vorrichtung durchaus aus. Da die Verzahnung an die Genauigkeit keine großen und an die Laufruhe überhaupt keine Anforderungen stellt, ist es möglich und kostengünstig, statt der Zahnräder 10 die Peripherie der Schenkel 4 in Kreisbogenform und mit Zähnen auszustatten und so die Verzahnung einstückig auszubilden.

Es ist selbstverständlich möglich, die beiden Schenkel, wenn Zahnräder 10 verwendet werden, gegenüber diesen Zahnrädern mit einer vorbestimmten Beweglichkeit bezüglich der Verdrehung um die Achse 9 zu versehen und eine Drehfeder zwischen den Zahnrädern 10 und den jeweils zugeordneten Schenkel 4 vorzusehen, um unrunden Werkstücken 1 besser folgen zu können.

Es ist selbstverständlich auch möglich, bei extrem langen Werkstücken 1 eine oder mehrere Zwischenlünetten zur Abstützung dieser Werkstücke vorzusehen. Als Materialien können die im Werkzeugmaschinenbau üblichen Materialien verwendet werden, wobei es aber insbesondere auch möglich ist, nicht nur die Tragrollen 3, sondern auch die Muttern 7 und unter Umständen auch die Spindel 8 aus hochwertigem Kunststoff auszubilden.

## Patentansprüche

1. Lünette zur Abstützung des freien Endes langer und im wesentlichen zylindrischer Werkstücke auf einer Bearbeitungsmaschine mit zumindest zwei Tragrollen (3), die drehbar in Schenkeln (4) gelagert sind, wobei die Schenkeln (4) an den den Tragrollen (3) abgewandten Enden schwenkbar gelagert sind und wobei zwischen den Schenkeln (4) eine den Spreizwinkel zwischen den Schenkeln fixierbar verändernde Fixiervorrichtung vorgesehen ist, dadurch gekennzeichnet, daß die Fixiervorrichtung eine Spindelvorrichtung (5) ist, die bevorzugt an den beiden Schenkeln (4) angreift.

2. Lünette nach Anspruch 1, dadurch gekennzeichnet, daß die Schenkel (4) an den einander zugekehrten Enden mit konzentrisch zu ihren Schwenkachsen (9) verlaufenden, mit Zähnen versehenen Kreisbogenabschnitten ausgestattet sind, bzw. daß solche Kreisbogenabschnitte drehfest mit den Schenkeln (4) verbunden sind.

3. Lünette nach Anspruch 1, dadurch gekennzeichnet, daß die Schenkel (4) an den einander zugekehrten Enden jeweils mit mit Zähnen versehenen Kreisbogenabschnitten ausgestattet sind, und daß eine Drehfeder zwischen den Kreisbogenabschnitten und dem jeweils zugeordneten Schenkel (4) vorgesehen ist.
